# EUROPEAN PATENT SPECIFICATION

(11) **EP 2 984 042 B1**
(45) Date of publication and mention of the grant of the patent: **14.04.2021**
(21) Application number: 13877311.4
(22) Date of filing: 08.11.2013
(51) Int. Cl.: C02F 1/26, C02F 1/58, C02F 1/52, B01D 11/04, B01D 21/01, C01B 21/46, C01B 7/07

(54) **A METHOD FOR PURIFICATION OF CIRCULATING LEACHING SOLUTIONS FROM PHOSPHATES AND FLUORIDES**
VERFAHREN ZUR REINIGUNG VON ZIRKULIERENDEN LAUGUNGSLÖSUNGEN VON PHOSPHATEN UND FLUORIDEN
MÉTHODE DE PURIFICATION DE SOLUTIONS DE LIXIVIATION EN CIRCULATION POUR ÉLIMINER LES PHOSPHATES ET LES FLUORURES

(30) Priority: 05.03.2013 RU 2013109741
(43) Date of publication of application: 17.02.2016
(73) Proprietor: Opened Joint Stock Company "United Chemical Company Uralchem", Moscow 123317 (RU)
(72) Inventor: GENKIN, Mikhail Vladimirovich, Moscow 119330 (RU); EVTUSHENKO, Aleksey Vladimirovich, Moscow 107589 (RU); KOMKOV, Aleksey Aleksandrovich, Moscow 117628 (RU); SAFIULINA, Alfiya Minerovna, Moscow 125480 (RU); SPIRIDONOV, Vasiliy Sergeevich, Moscow 119602 (RU); SHVETSOV, Sergey Vladimirovich, Nizhegorodskaya oblast Kstovo 607664 (RU)
(74) Representative: Pankowski, Jacek
(86) International application number: PCT/RU2013/000989
(87) International publication number: WO 2014/137237

(56) References cited:
- CA-A- 998 841
- RU-C1- 2 118 613
- SU-A1- 950 684
- SU-A3- 862 819
- SU-A3- 862 819
- US-A- 3 937 783
- US-A- 4 169 880
- US-A- 4 222 990
- GOUIDER M ET AL: "Separative recovery with lime of phosphate and fluoride from an acidic effluent containing H"3PO"4, HF and/or H"2SiF"6", JOURNAL OF HAZARDOUS MATERIALS, ELSEVIER, AMSTERDAM, NL, vol. 170, no. 2-3, 30 October 2009 (2009-10-30), pages 962-968, XP026521225, ISSN: 0304-3894, DOI: 10.1016/J.JHAZMAT.2009.05.067 [retrieved on 2009-05-21]

## Description

### Field of the invention

The present invention relates to technologies for recovery of valuable components from mineral raw materials, in particular, to purification from phosphates and fluorides circulating leaching solutions used in the course of rare-earth metals (REM) recovery from phosphogypsum.

### Background of the invention

Processing of raw materials with acidic solution is often performed in an industry. After removal of the target component from this solution, a large volume of liquid comprising acid and soluble salt remains. Use of these solutions is often complicated by the presence of impurities that impede the leaching of the target component. Removal of these impurities, as well as utilization of the solution is a complicated and expensive task.

It is known that among all types of phosphate raw materials processed for fertilizer, apatite concentrate, containing about 0.9% rare earth elements, is of the greatest practical value as a source of rare earth elements. Apatite has an advantage over other types of materials, such as loparite, in view of the composition and content of rare metals, of yttrium, medium and heavy rare earth elements.

The main process for apatite treatment is sulphuric acid technology for producing phosphoric acid from apatite. In this case, the main waste product is phosphogypsum (calcium sulfate contaminated with impurities of P₂O₅, F, Fe, Al, Sr, REM), which comprises most of the rare-earth metals contained in apatite. Every year millions of tons of phosphogypsum containing about 0.5 % REM in terms of oxides, which currently can not be extracted from it, are sent to dumps. Furthermore, the presence of such dumps containing toxic compounds including fluorine is an environmental problem.

A process for recovering rare earth elements from solutions containing REM phosphates, calcium and mineral acid described in RU patent No. 2118613 comprises neutralizing the alkaline solution and obtaining the precipitate of REM phosphates.

In a method for extracting REM from apatite described in RU patent No. 2049727, nitrogen-phosphate solution obtained after processing apatite with acid and separating the precipitate is neutralized with ammonia, and the precipitate of commercial REM concentrate is separated from the solution.

It is well-known that phosphorus can be precipitated as calcium phosphate, while fluorine, sodium and potassium can be precipitated as calcium fluoride and sodium and potassium silicofluorides. Precipitation of these compounds, however, may occur only from neutral or slightly acidic (pH> 3) solutions. When solutions containing 0.5 mol/L of acid are used, this method is unattractive, since it results in significant consumption of reagents and deterioration of process economics.

A method for isolation of rare earth elements from nitric-phosphate solution comprising crystallization of calcium nitrate tetrahydrate from solution obtained after decomposition of apatite with nitric acid, precipitation and separation of sodium silicofluoride, neutralization of nitric-phosphoric acid solution with ammonia, separation of precipitate of REM phosphates from the mother liquor and washing the precipitate with water is well-known (Complex processing of phosphate raw materials with nitric acid. Ed. Goldinov A.L., Kopylev B.A. L.: "Chemistry" (rus), 1982, pp. 154-156). Neutralization of nitric-phosphoric acid solution with gaseous ammonia or ammonia water is carried out in two stages: at the first stage the solution is neutralized to a value at which precipitate is not formed, pH 0-0,1, at the second stage the solution is neutralized to a final pH 1,1-1,4 at a temperature of 80°C.

Disadvantages of these methods are that the acids used to recover REM is neutralized and removed from the process with the formation of large volumes of dilute solutions, which leads to a substantial increase in energy costs and complexity of the process. In addition, the resulting REM concentrate is contaminated with impurities.

The method disclosed in the SU patent No. 862819 may be chosen as the closest analog, i.e. the prototype, of the present invention. According to the method monovalent acids (preferably nitric acid and haloid acids) are removed from salt solution by extraction with organic extractant, followed by re-extraction into the purified salt solution. In order to increase the monovalent acids recovery, sulfuric acid is added to the salt solution. Disadvantage of the method include necessity of subsequent recovery of other valuable components from the salt solution. In other words, an additional step of the process is required, additional organic extractant is consumed Canadian patent application CA 998841 discloses a liquid extraction method for removing monovalent inorganic acids form aqueous solutions containing metal salts of the acids. First, the sulfuric acid content of the solution is adjusted to be at least equivalent to the metal ion content, and then the monovalent inorganic acids are extracted by bringing the solution into contact with organic liquid phase containing compounds forming adducts with monovalent acids. The aqueous solution can contain water soluble salts of monovalent acids and metal ions ranging from alkali and ammonia ions to heavy metal ions. Certain heavy metals, such as molybdenum and tungsten, have tendency to transfer to the organic phase. The application is silent about the oxidation level of said molybdenum and tungsten species, i.e. whether molybdenum and tungsten are in the anionic form or cationic form. The paper of Gudier M, et al., entitled "Separative recovery with lime of phosphate and fluoride from acidic effluent containing HsPO6, HF and/or H2SiF6", Journal of Hazardous Materials, 170, pp. 962-968 (2009), relates to separative recovery with lime of fluoride and phosphate ions from phosphoric acids and/ or triple superphosphate production. Under highly acidic conditions two forms of fluoride are present in the crude effluent: HF and H2SiF₆. The treatment of synthetic mixtures of HF, H₂SiF₆ and H3PO4 with lime lead to the formation of CaF₂ instead of CaSiF₆, followed by phosphate precipitation. One aspect of the present invention provides a method for purification of acidic solutions of salts from impurities of phosphates, fluorine and alkali metals, and the use of this method simultaneously avoids a loss of acid. In the present invention, the term "REM" is used to indicate lanthanides and yttrium. Also, the symbol "Ln" is used for these elements.

The problem is solved by liquid extraction of acid into organic extractant. The organic extractant is selected so that impurities of phosphorus, fluorine and alkali metals remain in the aqueous solution. Then, calcium compounds are added to obtained subacid raffinate, and the raffinate is neutralized to pH> 6. The addition of calcium in the form of chalk (CaCO₃) or lime (CaO or Ca(OH)₂) is preferable, thus combining calcium entry into the solution and its neutralization. The phosphate and fluoride ions are precipitated in the form of CaHPO₄, Ca₃(PO₄)₂, CaF₂. If silicofluoride anions are present in the solution, these anions are precipitated in the form of (Na,K)2SiF6 by adding sodium or potassium compounds. If purification of the solution from sodium and potassium is required, fluorosilicic acid or calcium silicofluoride is added to the raffinate, thus precipitating Na2SiF6 and K2SiF6. The purified neutral solution is routed to the re-extraction of acid from the organic phase, so the organic extractant, circulating aqueous solution and acid are regenerated. Since the process of extraction and re-extraction is reversible, it is possible to select conditions in such a way that the loss of acid will be reduced by 75-98%. For this purpose it is preferable to carry out acid extraction and re-extraction stages in multistage countercurrent cascades. It is also necessary to select suitable organic extractant, flow ratio of organic extractant and an aqueous solution, and the number of stages of extraction and re-extraction.

For the extraction of nitric and hydrochloric acids (as well as hydrobromic and hydroiodic acids), ketones, mono- and polyethers, esters and amides of phosphoric acid or mixtures thereof may be used. For the extraction of perchloric acid, esters of phosphoric acid are preferably used. All these compounds poorly extract phosphoric acid and fluoride and silicofluoride anions.

Priority of processes for recovery of valuable components (recovered components, except for phosphorus and fluorine) and the acid extraction may be arbitrary. According to the present invention, the acid extraction may be carried out simultaneously with the extraction of valuable components provided that an organic extractant suitable for extraction of both acid and a valuable component is used.

Thus, use of the disclosed method allows to purify acidic salt solutions from impurities, i.e. phosphates, fluorides and silicofluorides, and prevent acid loss. Contrary to the prototype method, extraction of acid and other valuable component is performed simultaneously, thus allowing to reduce number of process steps and to use the same organic extractant.

The said valuable component can be, for example, REM compounds obtained during phosphogypsum processing.

The present invention is explained in more detail below using Figures and exemplary embodiments, serving solely for illustrative purposes and not intended to limit the scope of the present invention defined by the appended claims.

### Brief description of the Figures

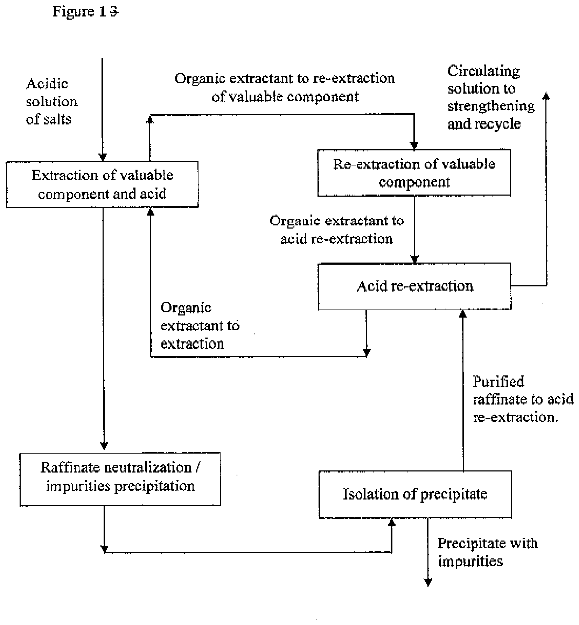

Figure 1 depicts a scheme for recovery of a valuable component from a salt solution, where an acid is extracted from an aqueous solution into organic phase simultaneously with the valuable component.

### Example 1

100 volume parts of a solution containing 250 g/L Ca(NO₃)₂, 60 g/L HNO₃, 2 g/L of rare-earth metal (REM) oxides Ln₂O₃, 6 g/L H₃PO₄, 1.5 g/L H₂SiF₆ were directed to a glass column filled with 10 volume parts of 20% solution of TRPO in MIBK (the H/D ratio = 40) with a flow rate of 10 parts/hour. The organic extractant, 20% solution of TRPO in MIBK, was directed towards the aqueous solution with a rate of 12 parts/hour. The outgoing raffinate contained 250 g/L Ca(NO₃)₂, 9 g/L HNO₃, 0.22 g/L Ln₂O_{3,} 6 g/L H₃PO₄, 1.5 g/L H₂SiF₆. The outgoing extractant contained 82 g/L HNO₃ and REM.

Raffinate obtained after extraction was neutralized with lime to reach pH=6.0. Precipitate containing 47% CaHPO₄, 14% CaF₂, 3% SiO₂ was obtained. The neutralized solution contained 260 g/L Ca(NO₃)₂, 0,1 g/L H₃PO₄, <0,1 g/L of fluorides.

The organic extractant was 3 times consequently treated with 50 volume parts of nitric acid at concentration 360 g/L to recover REM therefrom. After the REM extraction, the organic phase contained 104 g/L HNO₃.

The neutralized solution was directed to a glass column filled with 10 volume parts of extract of nitric acid in the organic extractant (the H/D ratio = 40) with a flow rate of 10 parts/hour. The 20% solution of TRPO in MIBK containing 104 g/L HNO₃ was directed towards the aqueous solution with a rate of 10 parts/hour. The outgoing organic extractant contained 16 g/L HNO₃. The outgoing solution contained 260 g/L Ca(NO₃)₂, 82 g/L HNO₃.

Thus, the recovery of valuable components (REM) from the salt solution was carried out simultaneously with nitric acid extraction into the organic extractant, the solution was purified from phosphorus and fluorine impurities, then the organic extractant was regenerated, and the nitric acid was returned to the salt solution.

## Claims

1. A method for purification of acidic solutions of salts of rare earth metals from phosphorus, fluorine and alkali metals impurities, the method comprising:
- selective extraction of the acid of the acidic solutions into an organic extractant simultaneously with rare earth metals, while phosphorus, fluorine and alkali metals impurities remain in raffinate;
- precipitation of calcium phosphates and fluorides from the raffinate by addition of calcium compounds selected from the group comprising CaCO₃, CaO or Ca(OH)₂ and, if necessary, precipitation of silicofluorides of alkali metals from the raffinate by addition of fluorosilicic acid or calcium silicofluoride; and re-extraction of the acid from the organic extractant into the purified raffinate obtained after precipitation stage.

2. The method of claim 1, wherein the alkali metal is selected from a group comprising sodium and potassium.

3. The method of claim 1, wherein the acid is selected from a group comprising nitric acid, hydrochloric acid, hydrobromic acid, hydroiodic acid, and perchloric acid.

4. The method of claim 1, wherein ketones, mono- and polyethers, esters and amides of phosphoric acid or mixtures thereof are used for extraction of nitric, hydrochloric acids, hydrobromic and hydroiodic acids, and esters of phosphoric acid are used for extraction of perchloric acid.

## Patentansprüche

1. Reinigungsmethode für die sauren Salzlösungen von Metallen der Seltenen Erden, die Phosphor, Fluor und Beimischungen von Alkalimetallen entfernt, diese Methode bezieht sich auf:
- die selektive Extraktion der Säure aus sauren Lösungen in ein organisches Extraktionsmittel gleichzeitig mit Metallen der Seltenerden, während die Unreinheiten aus dem Phosphor, Fluor und den Alkalimetallen im Raffinat bleiben;
- Fällung von Kalziumphosphaten und von Fluoriden aus dem Raffinat durch Zusatz von Kalziumverbindungen, die aus der Gruppe, die CaCO₃, CaO oder Ca(OH)₂ enthält, ausgewählt worden sind, und, wenn nötig, Fällung von Sillicofluoriden der Alkalimetalle aus dem Raffinat durch Zusatz von Fluorokieselsäure oder von Calciumhexafluorosilicat; und
- Rückextraktion der Säure aus dem organischen Extraktionsmittel in das gereinigte Raffinat, das nach der Fällungsetappe erhalten wurde.

2. Methode des Anspruches 1, in welcher das Alkalimetall aus einer Gruppe, die Natrium und Kalium enthält, ausgewählt wird.

3. Methode des Anspruches 1, in welcher die Säure aus einer Gruppe, die Salpetersäure, Chlorwasserstoffsäure, Bromwasserstoffsäure, Jodwasserstoffsäure und die Perchlorsäure enthält, ausgewählt wird.

4. Methode des Anspruches 1, in welcher Ketone, Mono- und Polyether, Ester und Amide der Phosphorsäure oder deren Mischungen für die Extraktion von Salpetersäure, Chlorwasserstoffsäure, Bromwasserstoffsäure und von Jodwasserstoffsäure verwendet werden und in welcher die Ester der Phosphorsäure für die Extraktion der Perchlorsäure verwendet werden.

## Revendications

1. Une méthode pour la purification des solutions acides des sels des métaux des terres rares permettant d'enlever les impuretés consistant en phosphore, en fluor et en métaux alcalins, cette méthode consiste en :
- Extraction sélective de l'acide des solutions acides dans un solvant organique d'extraction simultanément avec les métaux des terres rares, alors que les impuretés consistant en phosphore, en fluor et en métaux alcalins demeurent dans le produit raffiné ;
- Précipitation des phosphates de calcium et des fluorures en provenance du produit raffiné au moyen de l'ajout des composés chimiques de calcium sélectionnés dans le groupe qui contient CaCO₃, CaO ou Ca(OH)₂, et, si nécessaire, précipitation des silicofluorures des métaux alcalins en provenance du produit raffiné au moyen de l'ajout de l'acide fluorosilicique ou du silicofluorure de calcium ; et
- Réextraction de l'acide du solvant organique d'extraction dans le produit raffiné purifié qui a été obtenu après l'étape de la purification.

2. La méthode de la revendication 1, où le métal alcalin est sélectionné à partir du groupe qui contient du sodium et du potassium.

3. La méthode de la revendication 1, où l'acide est sélectionné à partir du groupe qui contient de l'acide nitrique, de l'acide chlorhydrique, de l'acide bromhydrique, de l'acide iodhydrique et de l'acide perchlorique.

4. La méthode de la revendication 1, où les cétones, les mono- et polyesters, les esters et les amides de l'acide phosphorique ou leurs mélanges sont utilisés pour l'extraction des acides nitriques, hydrochloriques, bromhydriques et iodhydriques et où les esters de l'acide phosphorique sont utilisés pour l'extraction de l'acide perchlorique.
